# FASCICULE DE BREVET EUROPEEN

(11) **EP 1 453 843 B1**
(45) Date de publication et mention de la délivrance du brevet: **08.05.2013**
(21) Numéro de dépôt: 02804644.9
(22) Date de dépôt: 09.12.2002
(51) Int. Cl.: C07F 15/02

(54) **OLIGO-ELEMENT EN POUDRE, PROCEDE ET DISPOSITIF POUR SA FABRICATION**
PULVERSPURENELEMENT, VERFAHREN UND VORRICHTUNG ZU DESSEN HERSTELLUNG
POWDER TRACE ELEMENT, METHOD AND DEVICE FOR MAKING SAME

(30) Priorité: 11.12.2001 FR 0116164; 26.08.2002 FR 0210632
(43) Date de publication de la demande: 08.09.2004
(73) Titulaire: Pancosma S.A., 1218 Le Grand-Saconnex (CH)
(72) Inventeur: JACQUIER, Yvan, F-74160 Saint Julien en Genevois (FR); OGUEY, Sébastien, CH-1110 Morges (CH)
(74) Mandataire: Moinas & Savoye SA
(86) Numéro de dépôt international: PCT/IB2002/005283
(87) Numéro de publication internationale: WO 2003/049850

(56) Documents cités:
- WO-A-02/30947
- GB-A- 814 063
- US-A- 2 877 253
- US-A- 3 950 372
- US-A- 4 758 439
- US-A- 4 830 716
- US-A- 5 468 720
- CHEMICAL ABSTRACTS, vol. 114, no. 10, 11 mars 1991 (1991-03-11) Columbus, Ohio, US; abstract no. 89346, BALKUNOVA,L.P. ET AL: "Magnesium sulfate-glycine-water system at 50.degree.C" XP002240364 & ZHURNAL NEORGANICHESKOI KHIMII, vol. 35, no. 11, 1990, pages 2977-2979,
- CHEMICAL ABSTRACTS, vol. 80, no. 16, 22 avril 1974 (1974-04-22) Columbus, Ohio, US; abstract no. 90597, MOLDOBAEV ,S. ET AL: "Physical-chemical study of the reaction of glycine with manganese sulfate in aqueous medium" XP002240365 & TR. KIRG. UNIV., SER. KHIM. NAUK, no. 2, 1972, pages 29-31,
- PATENT ABSTRACTS OF JAPAN vol. 2000, no. 10, 17 novembre 2000 (2000-11-17) & JP 2000 186273 A (KAO CORP), 4 juillet 2000 (2000-07-04)
- DATABASE WPI Section Ch, Derwent Publications Ltd., London, GB; Class B00, AN 1966-11043F XP002240366 & JP 39 001405 B (TACHIBANA SEIYAKUHIN)
- DATABASE WPI Section Ch, Week 197422 Derwent Publications Ltd., London, GB; Class C01, AN 1974-40979V XP002240367 & SU 393 282 A (ORG CHEM INST KIRGIZ AS), 28 décembre 1973 (1973-12-28)
- DATABASE WPI Section Ch, Week 198242 Derwent Publications Ltd., London, GB; Class C03, AN 1982-90038E XP002240368 & SU 891 055 A (AGRIC LIVESTOCK), 28 décembre 1981 (1981-12-28)

## Description

### DOMAINE TECHNIQUE DE L'INVENTION

L'invention concerne les complexes organométalliques conditionnés en poudre qui, par leur nature, sont destinés à être employés en tant que source de métal biodisponible pour l'animal ou l'homme. Ces complexes sont généralement des combinaisons d'acides aminés et de métaux, et sont désignés par les appellations oligoéléments ou macroéléments.

Exposés à l'air humide, de tels complexes en poudre connus ne sont pas stables à l'humidité. Ils prennent rapidement l'humidité. Ce faisant, ils deviennent durs, prennent en masse, forment une croûte ou même deviennent pâteux ou liquides. Ce phénomène est appelé mottage ou déliquescence. Il en résulte que les complexes ne sont plus hydrosolubles et parfaitement dispersibles dans le même temps.

Ces inconvénients perturbent fortement les utilisations essentielles de ces complexes, dans lesquelles on veut pouvoir mélanger de façon homogène le complexe en dose réduite dans un substrat, par exemple en dose de l'ordre de 1 à 1 000 grammes par tonne, ou dans des mélanges en dose de l'ordre de 1 à 250 ‰.

On veut alors disposer d'une poudre suffisamment fine, et dont la finesse reste suffisante pendant le mélange avec le substrat. Or dans les conditions d'usage habituelles, le substrat contient fréquemment une certaine quantité d'eau libre. Le mélange n'est alors possible que si la poudre présente une hygroscopicité suffisamment faible pour que ses grains restent détachés et dispersibles malgré la présence de l'humidité.

L'invention concerne plus spécialement les complexes organométalliques de la glycine.

A ce jour un nombre restreint de techniques sont employées pour obtenir des produits en poudre, dont la plus courante est le séchage par atomisation, encore appelé "spray dry".

Le séchage par atomisation consiste à amener la solution aqueuse concentrée contenant le produit à sécher dans une turbine ou des buses de manière à pulvériser cette solution en fines gouttelettes dans une chambre à haute température (entre 150 et 220°C). Là, l'eau est immédiatement évaporée, et les très fines particules de produit sont transportées par un courant d'air jusque dans un cyclone pour séparer l'air humide et le produit sec.

Un exemple d'application du séchage par atomisation est décrit dans le document WO 99 61037, pour préparer un additif contenant en mélange une plante botanique, de la cellulose microcristalline et du carbonate de calcium. On réalise ainsi une composition en poudre directement compressible pour former des comprimés. Le document ne se préoccupe pas de l'éventuel caractère hygroscopique des produits, ni des moyens pour réduire l'hygroscopicité d'un produit pulvérulent.

La technologie de séchage par atomisation produit nécessairement des gouttelettes pulvérisées de très petite taille et à très faible teneur en eau. Elle ne permet pas de sélectionner efficacement le taux d'humidité et la granulométrie du produit fini. Le produit obtenu présente une hygroscopicité trop importante, ce qui entraîne les phénomènes de mottage ou de déliquescence.

Le document US 4,111,853 A concerne des formulations de poudres détergentes à base de NaAOS. Les poudres sont obtenues par un procédé de séchage par atomisation. Une poudre ainsi obtenue contient de l'eau libre, et n'est donc pas cristalline. Pour éviter le mottage, le document enseigne de mélanger la poudre détergente avec du silicate de sodium, c'est-à-dire un mélange de silice et d'oxyde de sodium. Il en résulte que le mélange n'est pas entièrement hydrosoluble.

Dans le document US 5,468,720 A, la silice est également utilisée pour éviter la formation d'une croûte dans une poudre de chlorure de mepiquat obtenue par séchage sous vide. Le taux d'humidité de la poudre ainsi réalisée est très bas, et la poudre n'est pas cristallisée.

Le document US 5,840,358 concerne la préparation d'un additif alimentaire à base de lysine pour animaux. Le document mentionne le caractère hygroscopique du produit de départ, qui provoque son agglomération et la formation de croûtes, et qui empêche son mélange avec les aliments. Pour éviter ces inconvénients, le document enseigne de sécher le produit dans un lit fluidisé, dans lequel des particules restent en suspension dans un courant d'air ou de gaz dirigé du bas vers le haut. Simultanément, le produit est pulvérisé sous forme liquide dans le lit fluidisé, et vient recharger les particules en augmentant ainsi leur taille, et en les compactant individuellement. On réalise ainsi des particules compactées en couches, similaires à un oignon, dont la taille varie de 100 à 1 500 microns, et de préférence de 500 à 1 200 microns. Les tailles de particules sont élevées, et conviennent pour les concentrations habituelles de l'ordre de 3 % pour l'ajout de lysine dans les aliments pour bétail. Mais ces tailles sont trop grosses pour les produits destinés à être utilisés selon des doses de 1 à 1 000 grammes par tonne. En outre, le procédé de lit fluidisé ne permet apparemment pas de réaliser des complexes cristallins.

Le document US 5,213,838 décrit la fabrication d'un substitut du sel de cuisine. Un mélange de sels en solution est séché sous vide dans un évaporateur rotatif à vide pour enlever la majeure partie de l'eau. Avant séchage complet, la pâte est transférée dans un dispositif de séchage à air chaud pour réaliser un séchage complet. Ensuite, le solide obtenu est broyé. La poudre ainsi obtenue présente manifestement une hygroscopicité élevée. Pour réduire cet inconvénient, le document propose d'enrober les cristaux de sels obtenus avec une couche protectrice en un matériau qui ne réagit pas à l'eau ou à la vapeur d'eau. Le matériau est pulvérisé dans un lit fluidisé de poudre cristalline. Des exemples de matériau sont l'acide phosphorique, l'acide sulfurique, ou des sels de potassium. On comprend que ce procédé nécessite l'introduction de composants supplémentaires qui nuisent à la pureté du produit final, et qui nuisent également à la solubilité du produit final.

Le document US 3,950,372 décrit un complexe hydrosoluble de la glycine avec un sulfate de manganèse, dans lequel la glycine est liée au métal par un seul oxygène de son groupe carbonyle.

### EXPOSE DE L'INVENTION

Le problème proposé par la présente invention est d'éviter les inconvénients des produits et procédés connus, en proposant des complexes organométalliques de glycine hydrosolubles, et leur procédé d'obtention, qui bien que conditionnés en poudre fine et contenant un ou plusieurs produits à caractère hygroscopique inhérent, présentent une hygroscopicité très faible permettant leur stabilité dans les conditions habituelles d'usage, les complexes restant hydrosolubles et parfaitement dispersibles dans le même temps.

On cherche en particulier à ce que le composé pulvérulent soit suffisamment stable en présence d'humidité pour être conservé, puis mélangé de façon homogène à un substrat selon des doses réduites de l'ordre de 1 à 1 000 grammes par tonne.

L'invention vise à résoudre ce problème sans adjonction de produit supplémentaire.

L'idée qui est à la base de l'invention est de conférer au complexe en poudre une forme physique et/ou chimique appropriée présentant en elle-même une hygroscopicité nettement plus réduite que les produits de départ ou que les composés similaires obtenus à partir des produits de départ au moyen des procédés habituellement utilisés, sans nuire au caractère hydrosoluble.

Pour atteindre ces buts ainsi que d'autres, l'invention propose notamment un complexe organométallique hydrosoluble de la glycine avec un sulfate de métal dans lequel la glycine est liée au métal par les deux oxygènes de son groupe carbonyle.

De préférence, selon l'invention, le complexe est cristallin. La solubilité dans l'eau est réalisée en s'abstenant d'introduire un agent antimottant en poudre non soluble tel que la silice. L'état cristallin est obtenu en choisissant des conditions de séchage conférant un taux d'hydratation approprié.

La famille des complexes organométalliques de glycine selon l'invention est formée de complexes dans lesquels la glycine est liée au métal par les deux oxygènes de son groupe carbonyle, selon la formule : 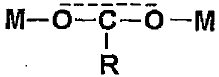 dans laquelle le radical R désigne - CH₂ - NH₃.

Cette famille comprend des complexes dont le métal est le manganèse, le cuivre, le fer ou le zinc.

On range dans cette famille notamment le glycinate de fer sulfate trihydrate, le glycinate de manganèse sulfate anhydre, le glycinate de cuivre sulfate dihydrate, le glycinate de zinc sulfate dihydrate, le glycinate de zinc sulfate trihydrate.

La poudre selon l'invention peut être constituée d'un seul complexe défini ci-dessus. Mais elle peut aussi comprendre un mélange contenant au moins l'un des complexes ci-dessous.

L'invention propose également un procédé de conditionnement en poudre d'un complexe organométallique hydrosoluble, applicable notamment aux complexes définis ci-dessus, le procédé comprenant les étapes :
a) mettre le produit ou les ingrédients en solution aqueuse ;
b) sécher sous vide la solution aqueuse en mélangeant dans une installation de séchage sous vide, à température et pression adaptées, jusqu'à atteindre un taux d'humidité approprié ;
c) faire en sorte que les grains du composé obtenu aient une taille appropriée, par un broyage du composé après séchage ou par un choix des conditions de séchage.

Si les grains obtenus par séchage sont trop gros, on broie le composé séché qui en résulte, et/ou on le tamise, de façon à réaliser des grains ayant une taille appropriée.

Pour certains composés, on pourra éviter l'étape de broyage si un choix approprié des conditions de séchage permet d'obtenir la granulométrie recherchée.

En pratique, le taux d'humidité approprié en fin de séchage est supérieur à 0,5 % en poids, sauf dans le cas des complexes anhydres. De préférence, le taux d'humidité en fin de séchage est compris entre 1 % et 40 % en poids pour les complexes hydratés.

En fonction des produits contenus dans la solution, on choisit le taux d'humidité de façon à ce que les grains obtenus soient en phase cristalline solide contenant de l'eau en quantité voisine de la quantité nécessaire à l'obtention de la composition chimique cristalline désirée, ou quantité correspondant à l'hydratation complète du complexe cristallisé.

De préférence, la granulométrie appropriée obtenue par séchage et après broyage éventuel et/ou tamisage est telle que 10 % au plus des grains ont un diamètre inférieur à 40 µm, et 5 % au plus des grains ont un diamètre supérieur à 900 µm.

Le procédé de préparation de poudres selon l'invention peut également trouver application dans des préparations autres que les complexes de glycine mentionnés ci-dessus. On peut l'appliquer avec succès dans la préparation de chélates, de protéinates, de chélates européens à base d'acides aminés issus de l'hydrolyse du soja, de poudres à base de certaines levures.

### DESCRIPTION SOMMAIRE DES DESSINS

Le procédé selon l'invention, ainsi que des exemples de composés, seront maintenant décrits en relation avec les figures jointes dans lesquelles :
- la figure 1 illustre schématiquement un dispositif pour l'obtention des complexes organométalliques selon l'invention ;
- les figures 8 et 9 sont deux représentations de la structure chimique tridimensionnelle du glycinate de fer sulfate trihydrate selon l'invention ;
- les figures 10 et 11 illustrent respectivement la structure chimique tridimensionnelle et l'arrangement tridimensionnel cristallisé du glycinate de manganèse sulfate anhydre selon l'invention ;
- les figures 12 et 13 illustrent respectivement la structure chimique tridimensionnelle et l'arrangement tridimensionnel cristallisé du glycinate de cuivre sulfate dihydrate selon l'invention ;
- les figures 14 et 15 illustrent respectivement l'arrangement tridimensionnel cristallisé et la structure chimique tridimensionnelle du glycinate de zinc sulfate dihydrate selon l'invention ;
- les figures 18 et 19 illustrent respectivement la structure chimique tridimensionnelle et l'arrangement tridimensionnel du glycinate de zinc sulfate trihydrate selon l'invention.

### DESCRIPTION DES MODES DE REALISATION PREFERES

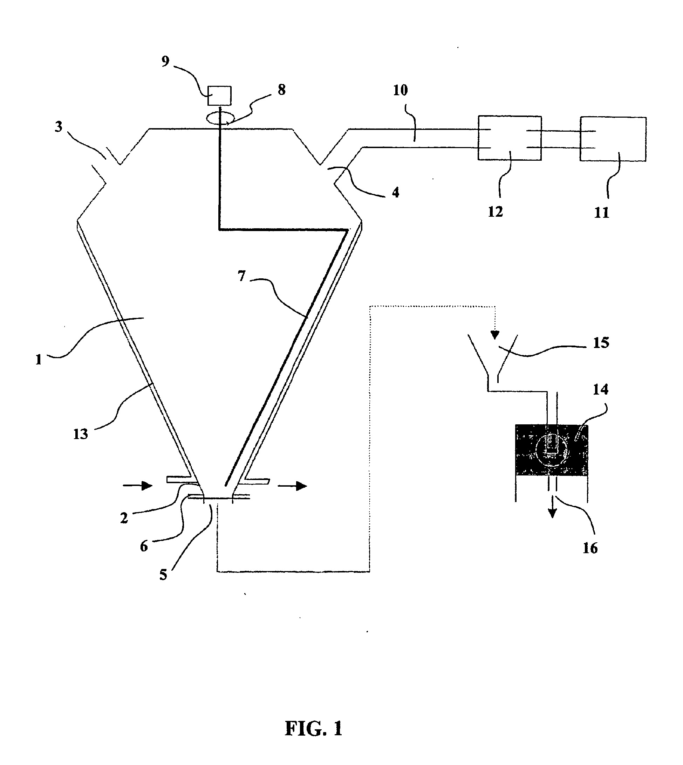

On se référera tout d'abord à la figure 1, illustrant schématiquement un dispositif permettant la fabrication des complexes selon l'invention.

Le dispositif comprend un mélangeur sécheur 1 composé d'une cuve conique 2 étanche, munie d'une entrée supérieure 3 pour les réactifs, d'une sortie supérieure d'extraction de gaz 4, d'une sortie inférieure 5 obturée par une vanne 6, et d'un bras d'agitation 7 entraîné en rotation axiale 8 par un moteur 9.

La vanne 6 est étanche. L'entrée supérieure 3 est obturée par un couvercle étanche amovible. La sortie supérieure d'extraction de gaz 4 est raccordée par une canalisation 10 à une pompe à vide 11 avec interposition d'un condenseur 12.

La cuve conique 2 du mélangeur sécheur 1 est enveloppée d'un double manteau 13 dont l'espace intermédiaire peut être parcouru par un fluide caloporteur permettant de chauffer et de refroidir à volonté le contenu du mélangeur sécheur 1.

Le dispositif comporte en outre un broyeur 14, de préférence un broyeur anti-déflagrant, qui reçoit dans une trémie 15 les produits sortant de la sortie inférieure 5 du mélangeur sécheur 1, et qui les broie pour les transmettre ensuite par sa sortie 16 à un dispositif d'ensachage non représenté.

Lors de la fabrication des complexes au moyen d'un tel dispositif selon l'invention, on met les produits en solution aqueuse soit à l'extérieur du mélangeur sécheur 1, soit directement à l'intérieur du mélangeur sécheur 1 lorsque cela est possible. Les réactifs sont introduits par l'entrée supérieure 3, à pression atmosphérique, la vanne 6 étant fermée. On ferme l'entrée supérieure 3, on alimente le moteur 9 pour entraîner le bras d'agitation 7, on chauffe le mélange à température appropriée par un passage de fluide caloporteur dans le double manteau 13, puis on actionne la pompe à vide 11 pour sécher sous vide tout en mélangeant dans le mélangeur sécheur 1. On casse le vide et on arrête le chauffage lorsque le taux d'humidité approprié est obtenu dans le mélangeur sécheur 1. On transfère les poudres obtenues directement dans un dispositif d'ensachage si la poudre présente la granulométrie désirée dès sa sortie du mélangeur sécheur 1. Si nécessaire on transfère les poudres du mélangeur sécheur 1 vers le broyeur 14, et on broie alors les poudres jusqu'à obtenir la granulométrie désirée, et/ou on tamise les poudres en sortie du mélangeur sécheur 1 ou du broyeur 14.

En pratique, on peut repérer l'instant à partir duquel on a obtenu le taux d'humidité approprié soit en analysant la courbe de vitesse d'extraction d'eau hors du mélangeur sécheur 1, soit en prélevant un échantillon de composé dans le mélangeur sécheur 1 et en contrôlant son aspect pulvérulent et sa fluidité.

On décrira maintenant les produits obtenus, ainsi que leur mode d'obtention possible. Les quantités de composants sont indiquées en valeur absolue, correspondant à la capacité du mélangeur-sécheur utilisé. On comprendra que ces quantités peuvent être modifiées en proportion relative les unes et les autres. Des variations de quelques pourcents sont également possibles dans les quantités relatives de composants.

Les taux d'humidité ont été mesurés par dessiccation aux infrarouges. Les taux de métal ont été mesurés par spectrométrie d'absorption atomique. Les taux d'azote ont été mesurés par titration selon Kjehldahl. La structure chimique a été déterminée par diffraction aux rayons X, profitant du fait que les complexes sont obtenus sous forme cristalline.

### Glycinate de fer sulfate trihydrate

La synthèse du glycinate de fer sulfate trihydrate est opérée comme suit :
779 kg d'eau sont introduits dans un mélangeur - sécheur sous vide.

L'eau est chauffée à 60°C, puis 2142 kg de sulfate de fer II heptahydrate et 579 kg de glycine sont introduits dans le mélangeur-sécheur.

Le mélange est agité et chauffé jusqu'à ce qu'il atteigne une température de 70°C.

L'évaporation sous vide débute alors, avec une pression minimale de 10 mbar et une température du double manteau du mélangeur-sécheur de 95°C.

Le séchage se poursuit jusqu'à ce que le produit obtenu ait un taux d'humidité de 19%. (La mesure du taux d'humidité peut être effectuée à l'aide d'un dessiccateur infrarouge ou halogène, ou par thermogravimétrie).

Le produit, sous forme d'une poudre beige grossière, est récupéré puis broyé dans un broyeur anti-déflagrant.

Le produit obtenu est le glycinate de fer sulfate trihydrate.

La formule chimique de ce complexe est la suivante :

[Fe [(H₂O)₂ (SO₄)₂] Glycine [Fe (H₂O)₄] Glycine ] ₙ.

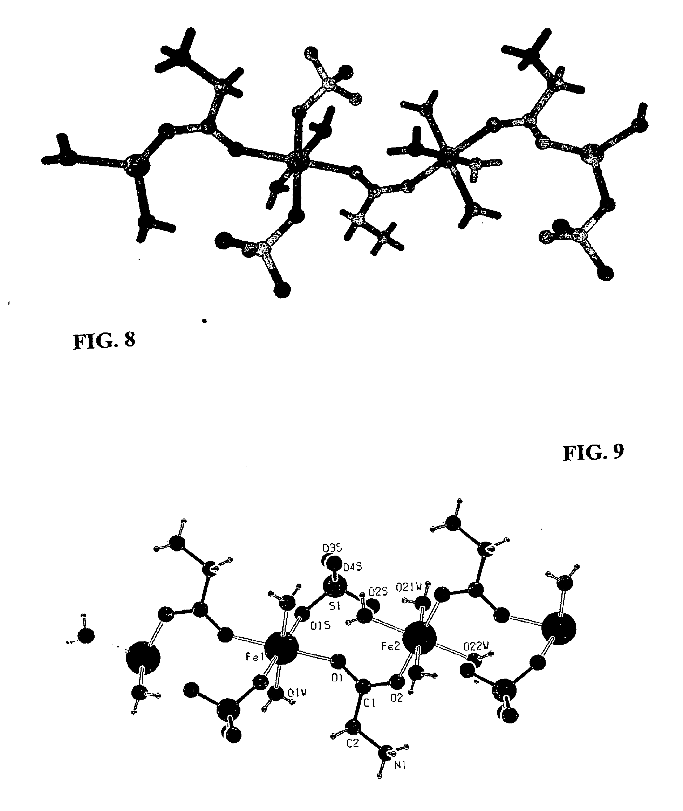

La structure tridimensionnelle de ce complexe est illustrée sur les figures 8 et 9.

### Glycinate de manganèse sulfate anhydre

La synthèse du glycinate de manganèse sulfate anhydre est opérée comme suit :
1623 kg d'eau sont introduits dans un mélangeur - sécheur sous vide.

L'eau est chauffée à 55°C, puis 1320 kg de sulfate de manganèse monohydrate et 584 kg de glycine sont introduits dans le mélangeur-sécheur.

Le mélange est agité et chauffé jusqu'à obtenir une température de 65 °C.

L'évaporation sous vide débute alors, avec une pression minimale de 10 mbar et une température du double manteau du mélangeur-sécheur de 95°C.

Le séchage se poursuit jusqu'à ce que le produit obtenu ait un taux d'humidité inférieur à 3%. (La mesure du taux d'humidité peut être effectuée à l'aide d'un dessiccateur infrarouge ou halogène, ou par thermogravimétrie).

Le produit, sous forme de billes rosâtres, est récupéré puis broyé dans un broyeur anti-déflagrant.

Le produit obtenu est le glycinate de manganèse sulfate anhydre.

La formule chimique de ce complexe est la suivante :

[Mn (Glycine) (SO₄)] ₙ.

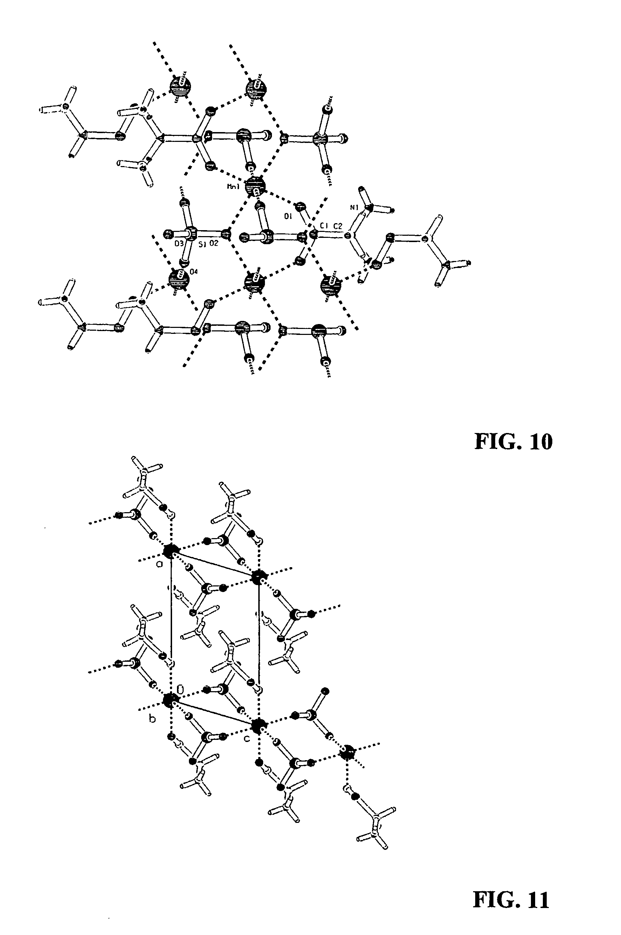

La structure tridimensionnelle de ce complexe est illustrée sur les figures 10 et 11.

### Glycinate de cuivre sulfate dihydrate

La synthèse du glycinate de cuivre sulfate dihydrate est opérée comme suit :
1100 kg d'eau sont introduits dans un mélangeur - sécheur sous vide.

L'eau est chauffée à 55°C, puis 1891 kg de sulfate de cuivre pentahydrate et 572 kg de glycine sont introduits dans le mélangeur-sécheur.

Le mélange est agité et chauffé jusqu'à obtenir une température de 70 °C.

L'évaporation sous vide débute alors, avec une pression minimale de 10 mbar et une température du double manteau du mélangeur-sécheur de 95°C.

Le séchage se poursuit jusqu'à ce que le produit obtenu ait un taux d'humidité de 13%. (La mesure du taux d'humidité peut être effectuée à l'aide d'un dessiccateur infrarouge ou halogène, ou par thermogravimétrie).

Le produit, sous forme d'une poudre grossière bleue, est récupéré puis broyé dans un broyeur anti-déflagrant.

Le produit obtenu est le glycinate de cuivre sulfate dihydrate.

La formule chimique de ce complexe est la suivante :

[Cu (Glycine) (H₂O)₂ (SO₄)] ₙ.

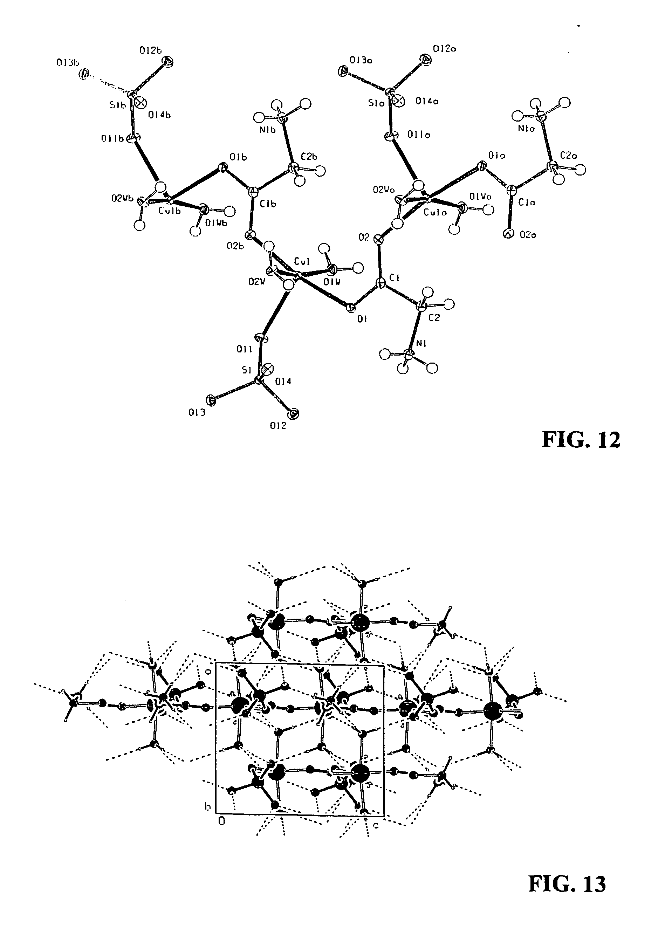

La structure tridimensionnelle de ce complexe est illustrée sur les figures 12 et 13.

### Glycinate de zinc sulfate dihydrate

La synthèse du glycinate de zinc sulfate dihydrate est opérée comme suit :
1617 kg d'eau sont introduits dans un mélangeur - sécheur sous vide

L'eau est chauffée à 55°C, puis 1318 kg de sulfate de zinc monohydrate et 555 kg de glycine sont introduits dans le mélangeur-sécheur (la dissolution du sulfate de zinc monohydrate est légèrement exothermique).

Le mélange est agité et chauffé jusqu'à obtenir une température de 70 °C.

L'évaporation sous vide débute alors, avec une pression minimale de 10 mbar et une température du double manteau du mélangeur-sécheur de 95°C.

Le séchage se poursuit jusqu'à ce que le produit obtenu ait un taux d'humidité de 13,2%. (La mesure du taux d'humidité peut être effectuée à l'aide d'un dessiccateur infrarouge ou halogène, ou par thermogravimétrie).

Le produit, sous forme de poudre blanchâtre grossière, est récupéré puis broyé dans un broyeur anti-déflagrant.

Le produit obtenu est le glycinate de zinc sulfate dihydrate.

La formule chimique de ce complexe est la suivante :

[Zn (Glycine)(H₂O)₂ (SO₄)]ₙ.

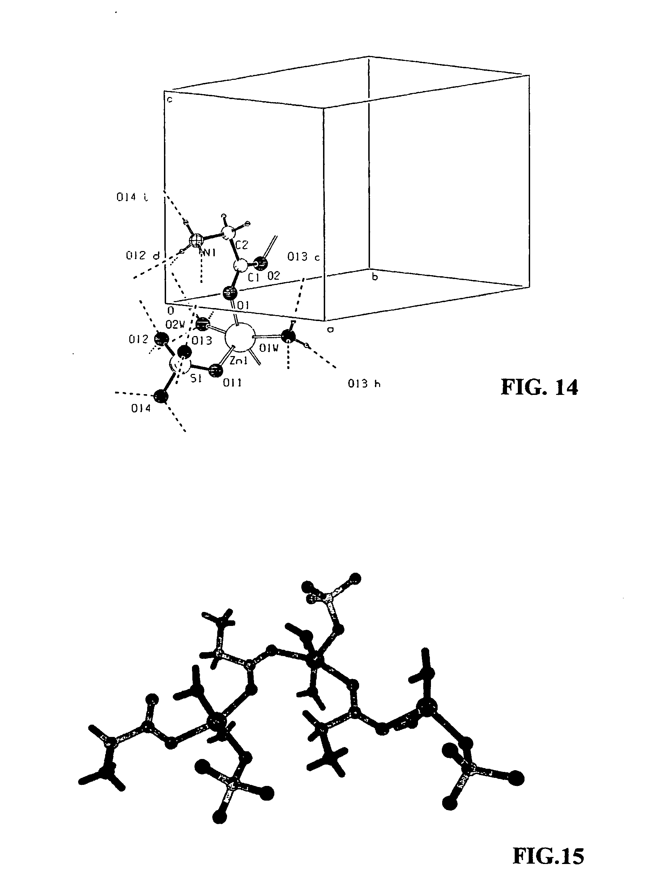

La structure tridimensionnelle de ce complexe est illustrée sur les figures 14 et 15.

### Glycinates de zinc sulfate trihydrate et pentahydrate

On réalise selon le procédé de l'invention un composé à base de sulfate de zinc, de glycine et d'eau.

On introduit pour cela 80 parts d'eau (par exemple 80 kg) dans le mélangeur sécheur 1, on chauffe l'eau à 76°C environ. On effectue un prémélange contenant 30 parts de glycine et 70 parts de sulfate de zinc monohydrate. On introduit le prémélange dans l'eau chaude contenue dans le mélangeur sécheur 1, en proportion de 100 parts de mélange pour 80 parts d'eau. On agite l'ensemble à 83°C par actionnement du bras d'agitation 7. On obtient une solution parfaitement limpide. On débute l'évaporation sous vide en brassant, à une pression minimale de 10 millibars par actionnement de la pompe à vide 11. Après 30 minutes, le produit a précipité. On poursuit son séchage pendant 3 heures tout en mélangeant. On obtient alors un produit sous forme de billes et de poudre grossière, qui est récupéré puis broyé dans le broyeur 14, pour obtenir une granulométrie appropriée.

On arrête le séchage lorsque le taux d'humidité est compris entre 18 % et 27 %, avantageusement de 21 % à 25 % environ. Le broyage est tel que la granulométrie d₅₀ est de 180 µm environ, et d₁₀ est de 100 µm environ.

Le composé obtenu présente un taux de zinc de 20 % environ, un taux d'azote de 4,3 % environ, et un taux d'humidité de 21 % à 25 % environ. La densité du composé obtenu est de 1,0, qui est nettement supérieure à la densité du composé obtenu à partir des mêmes produits de départ avec un procédé de séchage par atomisation. Cette densité supérieure, couplée à la granulométrie plus grossière obtenue par broyage, permet de manière très avantageuse d'éviter les problèmes de pulvérulence.

Une analyse de la poudre par diffraction des rayons X sur poudre a montré que le produit obtenu présente une structure chimique nouvelle, constituée de deux cristaux distincts :
1) un complexe hydrosoluble, que l'on peut désigner par l'appellation glycinate de zinc sulfate pentahydrate, et ayant la structure chimique suivante :

   [Zn(Glycine)₂(H₂O)₄]²⁺[SO₄]²⁻[Zn(H₂O)₆]²⁺[SO₄]²⁻
2) un complexe de type polymère organométallique linéaire hydrosoluble, que l'on peut désigner par l'appellation glycinate de zinc sulfate trihydrate, et dont la structure chimique est la suivante :

   [Zn[(H₂O)₂(SO₄)₂] Glycine [Zn(H₂O)₄] Glycine]ₙ

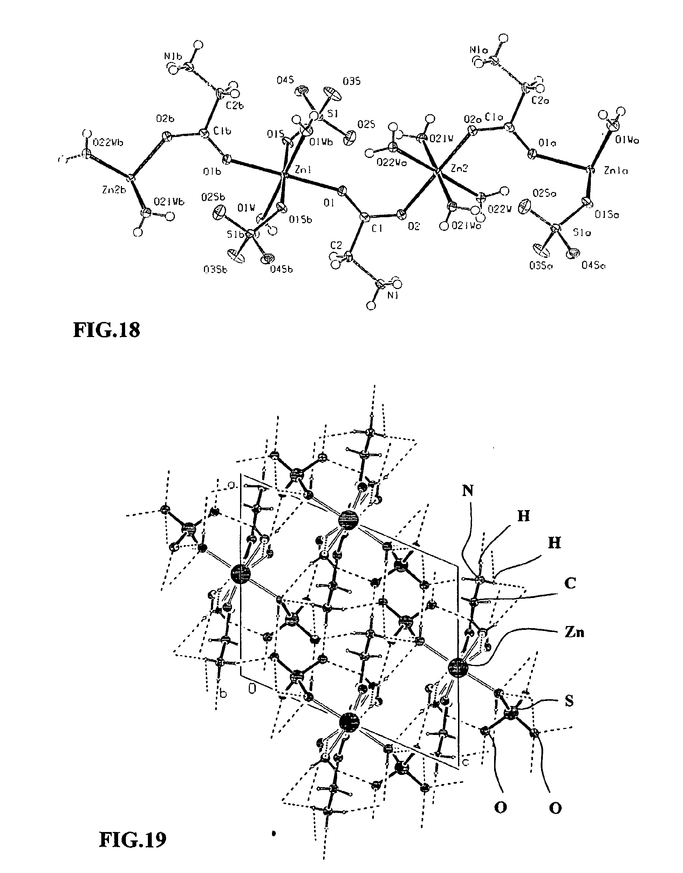

La figure 18 illustre la structure chimique tridimensionnelle du second complexe de type polymère, et la figure 19 illustre l'arrangement tridimensionnel de ce second complexe polymère.

Le procédé permet l'obtention d'une poudre cristalline hydrosoluble constituée d'un mélange de complexes cristallins selon les deux formules ci-dessus.

Dans les exemples ci-dessus, on a obtenu une poudre cristalline, libre d'écoulement, parfaitement stable à l'humidité : un essai a été effectué dans un humidificateur, à 25°C et 100 % d'humidité. La poudre n'était pas altérée après trois jours. En outre, la poudre était totalement hydrosoluble et parfaitement homogène.

Les complexes décrits ci-dessus sont des produits nouveaux, dont aucune description n'a été donnée jusqu'à présent. En particulier, on n'a donné jusqu'à présent aucune description des moyens pour obtenir ces produits, ni pour obtenir ces produits sous forme cristalline.

Dans le cas d'un métal pouvant donner lieu à au moins deux complexes ayant des taux d'hydratation spécifiques distincts à l'état cristallisé, on peut obtenir une poudre contenant un mélange de ces complexes en choisissant, en fin d'étape de séchage, un taux d'humidité intermédiaire entre les taux d'humidité correspondant aux pourcentages d'eau liée des complexes cristallisés. L'exemple ci-dessus des glycinates de zinc sulfate trihydrate et pentahydrate en est une illustration.

## Revendications

1. Complexe organométallique hydrosoluble de la glycine avec un métal, dans lequel la glycine est liée au métal par les deux oxygènes de son groupe carbonyle, selon la formule :

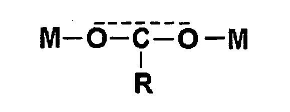

2. Complexe selon la revendication 1, **caractérisé en ce qu'**il est cristallin.

3. Complexe selon l'une des revendications 1 ou 2, **caractérisé en ce que** le métal est le manganèse, le cuivre, le fer ou le zinc.

4. Complexe selon la revendication 3, **caractérisé en ce qu'**il constitue un glycinate de fer sulfate trihydrate, selon la formule :
[Fe [(H₂O)₂(SO₄)₂] Glycine [Fe (H₂O)₄] Glycine ] ₙ.

5. Complexe selon la revendication 3, **caractérisé en ce qu'**il constitue un glycinate de manganèse sulfate anhydre, selon la formule :
[Mn (Glycine) (SO₄)] ₙ.

6. Complexe selon la revendication 3, **caractérisé en ce qu'**il constitue un glycinate de cuivre sulfate dihydrate, selon la formule :
[Cu (Glycine) (H₂O)₂ (SO₄)] ₙ.

7. Complexe selon la revendication 3, **caractérisé en ce qu'**il constitue un glycinate de zinc sulfate dihydrate, selon la formule :
[Zn (Glycine) (H₂O)₂ (SO₄)] ₙ.

8. Complexe selon la revendication 3, **caractérisé en ce qu'**il constitue un glycinate de zinc sulfate trihydrate, selon la formule :
[Zn [(H₂O)₂ (SO₄)₂] Glycine [Zn (H₂O)₄] Glycine] ₙ.

9. Complexe selon l'une quelconque des revendications 3 à 8, **caractérisé en ce qu'**il est sous forme de polymère hydrosoluble.

10. Complexe selon l'une quelconque des revendications 1 à 9, **caractérisé en ce qu'**il contient de l'eau liée en quantité voisine de la quantité correspondant à l'hydratation complète du complexe cristallisé.

11. Poudre composée d'un mélange contenant au moins l'un des complexes selon l'une quelconque des revendications 1 à 8.

12. Procédé de conditionnement en poudre d'un complexe hydrosoluble selon l'une quelconque des revendications 1 à 10, comprenant les étapes :
a) mettre le produit ou les ingrédients en solution aqueuse,
b) sécher sous vide la solution aqueuse en mélangeant dans une installation de séchage sous vide (1), à température et pression adaptées, jusqu'à atteindre un taux d'humidité approprié,
c) faire en sorte que les grains du composé obtenu aient une taille appropriée, par un broyage et/ou un tamisage du composé après séchage, ou par un choix des conditions de séchage.

13. Utilisation d'un complexe selon l'une quelconque des revendications 1 à 10 comme source de métal biodisponible pour l'animal ou l'homme.

14. Utilisation selon la revendication 13, dans laquelle le complexe est mélangé de façon homogène à un substrat selon des doses réduites de l'ordre de 1 à 1 000 grammes par tonne.

## Patentansprüche

1. Wasserlöslicher metallorganischer Komplex des Glycins mit einem Metall, in welchem das Glycin über die beiden Sauerstoff(atome) seiner Carbonylgruppe mit dem Metall verbunden ist, gemäß der Formel:

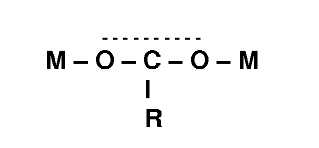

2. Komplex nach Anspruch 1, **dadurch gekennzeichnet, daß** er kristallin ist.

3. Komplex nach einem der Ansprüche 1 oder 2, **dadurch gekennzeichnet, daß** das Metall Mangan, Kupfer, Eisen oder Zink ist.

4. Komplex nach Anspruch 3, **dadurch gekennzeichnet, daß** er ein Glycinat von Eisensulfat-Trihydrat bildet, gemäß der Formel:
[Fe[(H₂O)₂ (SO₄)₂] Glycin [Fe(H₂O)₄] Glycin] ₙ.

5. Komplex nach Anspruch 3, **dadurch gekennzeichnet, daß** er ein Glycinat von wasserfreiem Mangansulfat bildet, gemäß der Formel:
[Mn (Glycin) (SO₄)] ₙ.

6. Komplex nach Anspruch 3, **dadurch gekennzeichnet, daß** er ein Glycinat von Kupfersulfat-Dihydrat bildet, gemäß der Formel:
[Cu (Glycin) (H₂O)₂ (SO₄)] ₙ.

7. Komplex nach Anspruch 3, **dadurch gekennzeichnet, daß** er ein Glycinat von Zinksulfat-Dihydrat bildet, gemäß der Formel:
[Zn (Glycin) (H₂O)₂ (SO₄)] ₙ.

8. Komplex nach Anspruch 3, **dadurch gekennzeichnet, daß** er ein Glycinat von Zinksulfat-Trihydrat bildet, gemäß der Formel:
[Zn [(H₂O)₂ (SO₄)₂] Glycin [Zn (H₂O)₄] Glycin] ₙ.

9. Komplex nach einem der Ansprüche 3 bis 8, **dadurch gekennzeichnet, daß** er in der Form eines wasserlöslichen Polymers vorliegt.

10. Komplex nach einem der Ansprüche 3 bis 9, **dadurch gekennzeichnet, daß** er gebundenes Wasser in einer Menge enthält, die in der Nähe von der Menge liegt, welche der Menge bei der vollständigen Hydratation des kristallisierten Komplexes entspricht.

11. Pulver, das aus einer Mischung zusammengesetzt ist, welche zumindest einen der Komplexe nach einem der Ansprüche 1 bis 8 enthält.

12. Verfahren zur pulverförmigen Konditionierung eines wasserlöslichen Komplexes nach einem der Ansprüche 1 bis 10, das folgende Schritte umfaßt:
a) Bringen des Produkts oder der Bestandteile in eine wäßrige Lösung,
b) Vakuumtrocknen der wäßrigen Lösung durch Mischen in einer Gefriertrocknungsanlage (1) unter Vakuum, bei einer angepassten Temperatur und einem angepassten Druck, bis ein geeigneter Feuchtigkeitsgehalt erreicht ist,
c) Erreichen durch ein Zerkleinern und/oder Sieben der Mischung nach dem Trocknen oder durch die Wahl der Bedingungen beim Trocknen, daß die erhaltenen Körner der Zusammensetzung eine geeignete Größe aufweisen.

13. Verwendung des Komplexes nach einem der Ansprüche 1 bis 10 als eine bioverfügbare Metallquelle für Tier und Mensch.

14. Verwendung nach Anspruch 13, bei welcher der Komplex in der Weise mit einem Substrat homogen gemischt ist, daß sich die Dosis in der Größenordnung von 1 bis 1 000 Gramm pro Tonne reduziert.

## Claims

1. Organometallic water-soluble complex of glycine with a metal, wherein the glycine is bonded to the metal by the two oxygens of its carbonyl group, in accordance with the formula:

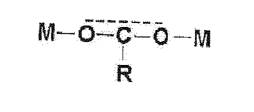

2. Complex according to claim 1, **characterized in that** it is crystalline.

3. Complex according to claim 1 or claim 2, **characterized in that** the metal is manganese, copper, iron or zinc.

4. Complex according to claim 3, **characterized in that** it constitutes a glycinate of iron sulfate trihydrate, in accordance with the formula:
[Fe[(H₂O)₂(SO₄)₂]Glycine[Fe(H₂O)₄]Glycine]ₙ.

5. Complex according to claim 3, **characterized in that** it constitutes a glycinate of anhydrous manganese sulfate, in accordance with the formula :
[Mn(Glycine)(SO₄)]ₙ.

6. Complex according to claim 3, **characterized in that** it constitutes a glycinate of copper sulfate dihydrate, in accordance with the formula:
[Cu(Glycine)(H₂O)₂(SO₄)]ₙ.

7. Complex according to claim 3, **characterized in** it constitutes a glycinate of zinc sulfate dihydrate, in accordance with the formula :
[Zn(Glycine)(H₂O)₂(SO₄)]ₙ.

8. Complex according to claim 3, **characterized in that** it constitutes a glycinate of zinc sulfate trihydrate, in accordance with the formula:
[Zn[(H₂O)₂(SO₄)₂]Glycine[Zn(H₂O)₄]Glycine]ₙ.

9. Complex according to one of claims 3 to 8, **characterized in that** it is in form of water-soluble polymer.

10. Complex according to one of claims 1 to 10, **characterized in that** it comprises bound water in an amount close to the amount corresponding to complete hydration of the crystallized complex.

11. Powder composed of a mixture comprising at least one of the complexes according to one of claims 1 to 8.

12. Method of powdering a water-soluble complex according to one of claims 1 to 10, comprising the following steps:
a) bringing the product or ingredients to aqueous solution,
b) drying the aqueous solution under vacuum by mixing in a vacuum drying installation (1), at appropriate temperature and pressure, until a suitable degree of humidity is reached,
c) ensuring that the particles of the compound obtained have an appropriate size, by grinding and/or screening the compound after drying, or by selecting the drying conditions.

13. Use of a complex according to one of claims 1 to 10 as a bioavailable metal source for animals or humans.

14. Use of a complex according to claim 13, wherein the complex is mixed homogeneously with a substrate at low doses in order of from 1 to 1 000 grams per ton.
